# EUROPEAN PATENT SPECIFICATION

(11) **EP 3 144 854 B1**
(45) Date of publication and mention of the grant of the patent: **24.04.2019**
(21) Application number: 16185612.5
(22) Date of filing: 25.08.2016
(51) Int. Cl.: G06K 9/62

(54) **IMAGE RECOGNITION SYSTEM THAT DISPLAYS A USER-FRIENDLY GRAPHICAL USER INTERFACE**
BILDERKENNUNGSSYSTEM, DAS EINE BENUTZERFREUNDLICHE GRAFISCHE BENUTZEROBERFLÄCHE ANZEIGT
SYSTÈME DE RECONNAISSANCE D'IMAGE QUI AFFICHE UNE INTERFACE UTILISATEUR GRAPHIQUE CONVIVIALE

(30) Priority: 16.09.2015 JP 2015183435
(43) Date of publication of application: 22.03.2017
(73) Proprietor: Toshiba TEC Kabushiki Kaisha, 141-8562 Tokyo (JP)
(72) Inventor: NAITO, Hidehiro, Shinagawa-ku, Tokyo 141-8562 (JP)
(74) Representative: Uchida, Kenji

(56) References cited:
- US-A1- 2015 023 548
- US-A1- 2015 023 555
- US-B1- 7 653 878
- US-B2- 8 166 412

## Description

### FIELD

Embodiments described herein relate generally to an image recognition system, a method for displaying a graphical user interface for a computing environment and a non-transitory computer readable medium comprising a program, the system being able to include a computer program product.

### BACKGROUND

Today, there is a point-of-sale (POS) system that displays merchandise candidates of an article to be purchased on a screen on the basis of feature data (feature value) extracted from a captured image of the article, employing object recognition technology. Conventionally, high-ranked merchandise candidates that have feature data of higher degrees of similarity to the feature data of the article to be purchased are displayed on the screen in a descending order of the degree of similarity. The cashier can select on the screen one of the displayed merchandise candidates that corresponds to the article to be purchased, and the selected candidate is registered as the article to be purchased.

For instance, US 2015/023555 A1 discloses a commodity recognition apparatus comprising an extraction module, a recognition module, a reception module, an adding module and a log writing module.

When different articles in a same merchandise category are scanned for image capturing, the same merchandise candidates may be displayed on the respective screens in the different order. Also, depending on captured images of an article, the same merchandise candidates may be displayed on the respective screens in the different order. Such a different display order of merchandise candidates may be rather inconvenient to cashers, especially experienced cashers, because the cashers may have to browse through each of the merchandise candidates until they can find the correct candidate.

To solve such problems, there is provided an image recognition system, as defined in claim 1.

The invention also relates to a method for displaying one or more graphical user interfaces for a computing environment, the method as defined in claim 8.

The invention further concerns a non-transitory computer readable medium as defined in claim 15.

### DESCRIPTION OF THE DRAWINGS

The above and other objects, features and advantages of the preset invention will be made apparent from the following description of the preferred embodiments, given as non-limiting examples, with reference to the accompanying drawings, in which:
FIG. 1 is an external perspective view of a checkout system according to a first embodiment.
FIG. 2 is a block diagram illustrating a hardware configuration of a checkout system.
FIG. 3 illustrates a data configuration of a PLU file.
FIG. 4 is a block diagram of a CPU of a merchandise reading apparatus and a CPU of a merchandise registration apparatus of the checkout system.
FIG. 5 is a flow chart illustrating processing for one transaction carried out by a checkout system.
FIGS. 6A and 6B illustrate a preset screen and a selection screen, respectively.
FIG. 7 illustrates a selection screen according to a second embodiment.
FIG. 8 illustrates a data configuration of a position designation file.
FIG. 9 is a flow chart illustrating processing for one transaction carried out by a checkout system according to the second embodiment.
FIG. 10 is a flow chart illustrating a process of setting a merchandise candidate in a selection button according to the second embodiment.
FIG. 11 illustrates an example of the selection screen according to the second embodiment.
FIG. 12 is an external perspective view of a self POS according to a third embodiment.
FIG. 13 is a block diagram illustrating a hardware configuration of the self POS.

### DETAILED DESCRIPTION

An embodiment provides an information processing apparatus and a program which are capable of fixing display positions of selection buttons for high-order merchandise candidates at predetermined positions.

In general, according to an embodiment, an image recognition system includes a data storage that stores, a camera configured to capture an image of an article to be identified, a display, and a processor configured to calculate a feature value of the article to be identified, based on the captured image, determine one or more high-ranked candidates based on the similarity between the feature value of the article to be identified and each of the feature values of reference articles stored in the data storage, and control the display to display a graphical user interface. The graphical user interface includes a plurality of objects arranged in a predetermined region thereof, each of one or more objects that corresponds to one of said one or more high-ranked candidates being displayed at a fixed display position that is associated with the corresponding high-ranked candidate.

### First Embodiment

Hereinafter, an information processing apparatus and a program will be described in detail with reference to the accompanying drawings. In the present embodiment, a merchandise reading apparatus of a checkout system provided in a store such as a supermarket is described as an embodiment of the information processing apparatus and the program.

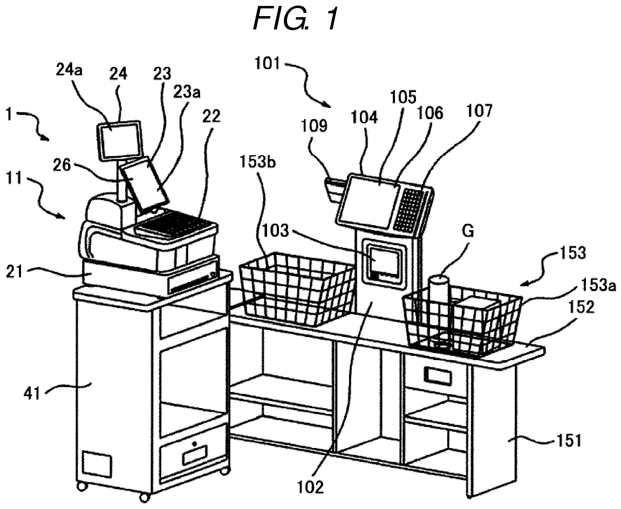

FIG. 1 is an external perspective view of a checkout system 1. As illustrated in FIG. 1, the checkout system 1 includes a merchandise reading apparatus 101 that reads, i.e., forms an image of, an article and displays one or more merchandise candidates based on the read result, and a merchandise registration apparatus (point-of-sale (POS) terminal) 11 that performs a registration process to register merchandise having merchandise identification information which is output from the merchandise reading apparatus 101. In the present embodiment, the POS terminal 11 serves as the information processing apparatus by executing the program of the present embodiment. The POS terminal 11 determines one or more merchandise candidates on the basis of feature data (feature value) of an article output from the merchandise reading apparatus 101, and outputs screen information to the merchandise reading apparatus 101 for displaying a screen to prompt a user (cashier in this example) to select one of the merchandise candidates.

In FIG. 1, the POS terminal 11 is mounted on a drawer 21 located on a register table 41. The POS terminal 11 includes a keyboard 22 having press-down keys arranged on an upper surface thereof. In addition, the POS terminal 11 includes a first display device 23, which is used for a cashier's input or the like, and a second display device 24, which is used for a customer's confirmation. The first and second display devices 23 and 24 are provided above the keyboard 22. The first display device 23 includes a display panel 23a such as a liquid crystal display and is a touch-panel display device on which a touch panel 26 is stacked on the display panel 23a. The second display device 24 includes a display panel 24a such as a liquid crystal display. The second display device 24 is rotatably set at an upper portion of the POS terminal 11. The drawer 21 accommodates bills i.e., paper currency, coins, and the like therein, and is opened under the control of the POS terminal 11.

A checkout table 151 forms, together with the register table 41, an L shaped table by being set next to the register table 41. A merchandise receiving surface 152 on which a shopping basket 153 or the like is mounted is formed on the upper surface of the checkout table 151. In FIG. 1, a first shopping basket 153a and a second shopping basket 153b are shown as the shopping baskets 153. The first shopping basket 153a is a shopping basket carried by a customer, that is, a shopping basket in which an article (for example, an article G) before reading is placed. The second shopping basket 153b is a shopping basket for accommodating an article for which reading is completed. A cashier picks up, for example, the article G from the first shopping basket 153a for reading, places the article G so as to be read by the merchandise reading apparatus 101, and then places the article G in the second shopping basket 153b.

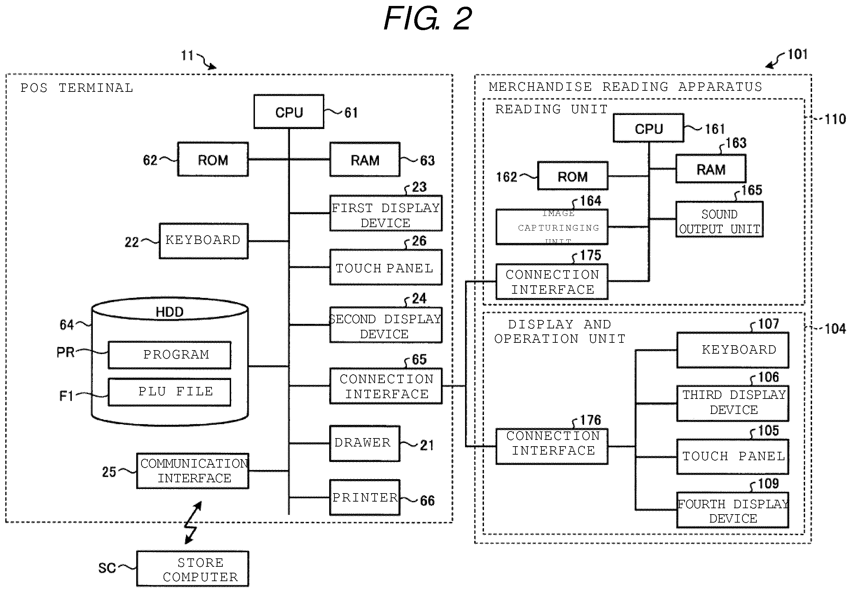

The merchandise reading apparatus 101 is set in the center portion of the merchandise receiving surface 152 of the checkout table 151, and is connected to the POS terminal 11 so as to be able to transmit and receive data in a wired or wireless manner. The merchandise reading apparatus 101 includes a reading unit 110 (see FIG. 2) in which a reading window 103 is disposed on a front surface of a housing 102. The reading window 103 is formed of a transparent glass plate or the like. In addition, the merchandise reading apparatus 101 includes a display and operation unit 104 in an upper portion of the housing 102. The display and operation unit 104 includes a third display device 106 such as a liquid crystal display which is mainly used for a cashier's input. The third display device 106 is configured such that a touch input can be performed by a touch panel 105 stacked thereon. In addition, a keyboard 107 is provided on the right of the third display device 106 so that a cashier's input can be performed through the keyboard 107. Further, the merchandise reading apparatus 101 includes a fourth display device 109, which is mainly used for a customer's confirmation, on the back side of the display and operation unit 104.

The reading unit 110 includes an image capturing unit 164 (see FIG. 2) for imaging an article or the like behind of the reading window 103. When an article is imaged by the image capturing unit 164, the reading unit 110 extracts feature data of the article from image data of the article captured thereby, and outputs the feature data to the POS terminal 11.

The display and operation unit 104 displays various screens, such as a preset screen (graphical user interface) and a merchandise candidate selection screen (graphical user interface), based on data output from the POS terminal 11, on the third display device 106 so that input can be performed on the screens. The preset screen is a screen in which a number of merchandise buttons for selecting merchandise, numeric keys for inputting the number of merchandise items or the like, and the like are arranged at predetermined positions (specific positions). The selection screen will be described below in detail.

Next, hardware configurations of the POS terminal 11 and the merchandise reading apparatus 101 will be described. FIG. 2 is a block diagram of the POS terminal 11 and the merchandise reading apparatus 101. The POS terminal 11 includes a central processing unit (CPU) 61, a read only memory (ROM) 62, a random access memory (RAM) 63, an HDD 64, a connection interface 65, a printer 66, a drawer 21, a keyboard 22, a first display device 23, a second display device 24, a communication interface 25, a touch panel 26, and the like. The CPU 61, the ROM 62, and the RAM 63 are connected to each other by a bus. In addition, all of the drawer 21, the keyboard 22, the first display device 23, the second display device 24, the communication interface 25, the touch panel 26, the HDD 64, the connection interface 65, and the printer 66 are connected to the above-mentioned bus through various input and output circuits (all of which are not shown in FIG. 2).

The CPU 61 is a central processing unit that performs overall control of the POS terminal 11. The ROM 62 is a non-volatile memory that stores a fixed program and the like. The RAM 63 is a volatile memory which is used as a working area by the CPU 61.

The HDD 64 is a storage unit, such as a hard disk, which stores various programs and various files. The various programs include a program PR for performing merchandise sales data processing, which includes determination of a merchandise candidate and arrangement of information indicating the merchandise candidate in a selection screen, and the like. The various files include a PLU file F1, which is distributed from a store computer SC and is stored, and the like. In addition, a registration table for registering merchandise, a sales table, and the like are stored in the HDD 64.

The communication interface 25 is a network card for performing data communication with the store computer SC, or the like. The store computer SC is disposed at a back office of a store, or the like. The store computer SC stores the PLU file F1 to be distributed to the POS terminal 11, in an HDD (not shown) thereof.

The connection interface 65 is an interface for communicating with a connection interface 175 or a connection interface 176 of the merchandise reading apparatus 101. The communication is performed in a wired or wireless manner. The printer 66 is a printing apparatus that prints transaction contents on a receipt or the like and discharges the receipt.

The merchandise reading apparatus 101 includes a CPU 161, a ROM 162, a RAM 163, an image capturing unit 164, a sound output unit 165, a connection interface 175, a connection interface 176, a touch panel 105, a third display device 106, a keyboard 107, a fourth display device 109, and the like. The CPU 161, the ROM 162, and the RAM 163 are connected to each other by a bus. In addition, each of the image capturing unit 164, the sound output unit 165, and the connection interface 175 is connected to the bus through various input and output circuits (all of which are not shown in FIG. 2). In addition, each of the touch panel 105, the third display device 106, the keyboard 107, and the fourth display device 109 is connected to the connection interface 176 through various input and output circuits (all of which are not shown in FIG. 2).

The CPU 161 is a central processing unit that performs overall control of the merchandise reading apparatus 101. The ROM 162 is a non-volatile memory that stores a control program and the like. The control program includes a program for performing a process of extracting feature data from an article image and outputting the extracted feature data to the POS terminal 11, and the like. The RAM 163 is a volatile memory which is used as a working area or the like by the CPU 161.

The image capturing unit 164 is a color image sensor including an imaging element such as a charge coupled device (CCD) or a complementary metal oxide semiconductor (CMOS). The image capturing unit 164 starts image capturing in accordance with an imaging turn-on signal received from the CPU 161, converts an image of an article held near the reading window 103 into an electrical signal at a predetermined frame rate (for example, 30 fps or the like), and sequentially outputs data of frame images.

The sound output unit 165 includes a reproduction circuit for reproducing a reading sound ("beep") which is set in advance, an alarm sound, a speech sound, or the like, a speaker, and the like. The sound output unit 165 reproduces a reading sound, an alarm sound, a speech sound, or the like in accordance with a control signal received from the CPU 161 and gives a notice of a reading state or the like by sound.

Further, the connection interface 175 is connected to the CPU 161. The connection interface 175 is communicably connected to the connection interface 65 of the POS terminal 11, and enables data transmission and reception between the merchandise reading apparatus 101 and the POS terminal 11.

The connection interface 176 is communicably connected to the connection interface 65 of the POS terminal 11, and enables data transmission and reception between the merchandise reading apparatus 101 and the POS terminal 11.

Here, the PLU file F1 will be described. The PLU file F1 is a data file in which merchandise information and feature data are associated with each other for each of one or more articles. The merchandise information includes merchandise identification information (merchandise ID, or the like) of the corresponding merchandise, merchandise classification, an illustration image of the merchandise, a unit price, or the like. The feature data indicate features of an article extracted in advance from sample image data of the article.

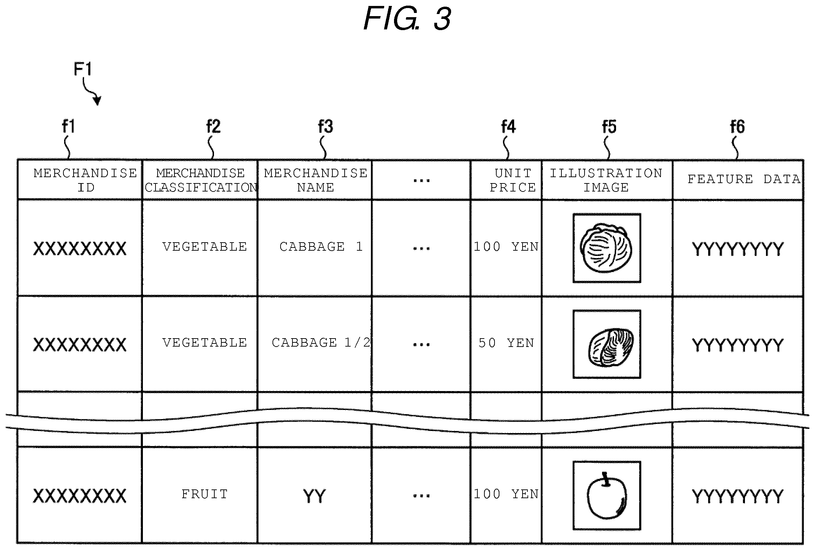

FIG. 3 illustrates an example of the PLU file F1. In the PLU file F1, merchandise information and feature data are associated with each other and the association is stored for each of a plurality of articles. More, specifically, in FIG. 3, the PLU file F1 stores a "merchandise ID" f1, "merchandise classification" f2, a "merchandise name" f3, a "unit price" f4, an "illustration image" f5, and the like for each of the articles. Such information is associated with "feature data" f6 of the merchandise. The data stored in the "feature data" f6 is used as data for collation during determination of a degree of similarity (described below in detail). Meanwhile, data of "XXXXXXXX" in the "merchandise ID" f1 is set to a unique value. In addition, data of "YYYYYYYY" in the "feature data" f6 is set to a random value which is calculated for each merchandise item.

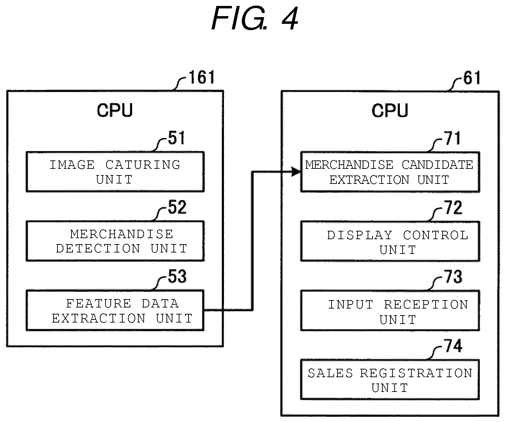

Next, functional configurations of the POS terminal 11 and the merchandise reading apparatus 101 will be described. FIG. 4 is a block diagram of the CPU 61 of the POS terminal 11 and the CPU 161 of the merchandise reading apparatus 101. In the merchandise reading apparatus 101, the CPU 161 illustrated in FIG. 2 appropriately executes a program stored in the ROM 162. As a result, as illustrated in FIG. 4, functional sections such as an image capturing section 51, a merchandise detection section 52, and a feature data extraction section 53 are generated. In addition, in the POS terminal 11, the CPU 61 illustrated in FIG. 2 appropriately executes a program stored in the ROM 62 or the HDD 64. Thereby, as illustrated in FIG. 4, functional sections such as a merchandise candidate extraction section 71, a display control section 72, an input reception section 73, and a sales registration section 74 are generated.

The image capturing unit 51 outputs an imaging turn-on signal to the image capturing unit 164 (see FIG. 2) to make the image capturing unit 164 start an image capturing operation. Thereafter, the image capturing unit 51 receives data of frame images output from the image capturing unit 164, and sequentially stores the data of frame images in the RAM 163 (see FIG. 2).

The merchandise detection section 52 detects that an article is held near the reading window 103 (see FIG. 1), on the basis of a plurality of continuous frame images. Specifically, the merchandise detection section 52 reads out data of the frame image, which were output from the image capturing unit 164 (see FIG. 2), from the RAM 163 (see FIG. 2) and compares the luminance of the frame image with the luminance of a frame image which is recently output. According to the comparison between the luminances, when there is a difference in luminance gradation therebetween, the merchandise detection section 52 determines that reflection of something such as a hand or an article occurs in the frame image. Further, the merchandise detection section 52 binarizes a frame image which is contiguous to the frame image having the reflection to thereby extract a contour line of the article. When the position of the contour line of the contiguous frame image changes, the merchandise detection section 52 specifies an image within the contour line as an article image indicating an article held near the reading window 103. In this manner, the merchandise detection section 52 detects that the article is held near the reading window 103.

Meanwhile, a method of specifying an article image is not limited to the method described above, and another method may be used. For example, the specification of an article image may be performed according to the presence or absence of a skin color region instead of being performed using the contour line of the article in the frame image. When the skin color region is present, it is expected that there is a reflection of a cashier's hand. Then, the contour line in the frame image is extracted, and an image within the contour line, indicating the shape of the hand, at a position where the article is grasped by the hand is specified as an article image.

The feature data extraction section 53 performs an object recognition process for recognizing an article within a frame image on an article image to thereby extract feature data from the article image. In addition, the feature data extraction section 53 outputs the feature data to the merchandise candidate extraction section 71 of the POS terminal 11. Specifically, the feature data extraction section 53 reads out a frame image including the article image from the RAM 163 (see FIG. 2). In addition, the feature data extraction section 53 extracts feature data inherent in an article which indicates a surface state, such as shades of the article or irregularities of the surface thereof, from the article image. Further, the feature data extraction section 53 outputs the feature data to the connection interface 175 (see FIG. 2). The connection interface 175 outputs the feature data to the connection interface 65 (see FIG. 2), and the merchandise candidate extraction section 71 is notified of the feature data from the connection interface 65.

Meanwhile, object recognition for recognizing an object included in an image is also called generic object recognition. Various recognition techniques of generic object recognition are explained in the following documents, and thus the documents will be referred to for details thereof. Keiji Yanai,"The Current State and Future Directions on Generic Object Recognition", Journal of Information Processing Society, Vol. 48, No. SIG16 [searched on August 10, 2010], Internet <URL:http://mm.cs.uec.ac.jp/IPSJ-TCVIM-Yanai.pdf>

Jamie Shotton, etc., "Semantic Texton Forests for Image Categorization and Segmentation", [searched on August 10, 2010], Internet <URL:http://citeseerx.ist.psu.edu/viewdoc/download?doi=10.1.1.145.3036&rep=rep1& type=pdf>

The merchandise candidate extraction section 71 collates with the received feature data with feature data of each merchandise item registered in the PLU file F1 (see FIG. 3), and extracts merchandise information (merchandise candidate information) from the PLU file F1 in order of the degree of similarity. In addition, the merchandise candidate extraction section 71 outputs the merchandise candidate information to the display control section 72.

For example, when feature data of each merchandise item within the PLU file F1 is set to satisfy the relation of 100%="the degree of similarity: 1.0", the degree of similarity indicates the degree of similarity between feature data of an article image and the feature data of each merchandise item. The degree of similarity may be calculated by absolute evaluation or relative evaluation.

For example, it is assumed that the degree of similarity is calculated by absolute evaluation. In this case, the feature data of the article image is compared one to one with feature data of the article image of each merchandise item in the PLU file F1, and the degree of similarity calculated as a result of the comparison is adopted as it is. Here, it is assumed that the degree of similarity of 95% is set as a threshold value. In this case, the merchandise candidate extraction section 71 performs sequencing on merchandise items having a degree of similarity of 95% or higher (merchandise candidate information) in order of the degree of similarity for each item, and outputs a result of the sequencing to the display control section 72.

In addition, it is assumed that the degree of similarity is calculated by relative evaluation. In this case, the calculation is performed so that the sum of the degrees of degree of similarity with respect to the respective merchandise items of the PLU file F1 is set to be 1.0 (100%). For example, assume that feature data of each of five merchandise items (first merchandise, second merchandise, third merchandise, fourth merchandise, and fifth merchandise) is registered in the PLU file F1. In this case, for example, the degree of similarity of the first merchandise is set to "0.6", the degree of similarity of the second merchandise is set to "0.1", the degree of similarity of the third merchandise is set to "0.1", the degree of similarity of the fourth merchandise is set to "0.1", the degree of similarity of the fifth merchandise is set to "0.1", or the like, and the sum of the degrees of similarity is set to 1.0 at all times. Here, it is assumed that the degree of similarity of 0.5 is set as a threshold value. In this case, the merchandise candidate extraction section 71 performs sequencing on merchandise information (merchandise candidate information) of merchandise items having the degree of similarity of 0.5 or greater in order of the degree of similarity of the items, and outputs a result of the sequencing to the display control section 72.

The display control section 72 controls the display of the first display device 23 (see FIG. 2), the second display device 24 (see FIG. 2), the third display device 106 (see FIG. 2), and the fourth display device 109 (see FIG. 2). In particular, the display control section 72 displays a preset screen in which a plurality of merchandise buttons for selecting merchandise, numeric keys for inputting the number of merchandise items or the like, and the like are arranged at predetermined positions on the third display device 106. Further, when merchandise candidate information is output from the merchandise candidate extraction section 71, the display control section 72 displays a selection screen including selection information on the third display device 106.

Specifically, the display control section 72 generates update information of the preset screen so that a merchandise button for high-ranked merchandise candidates designated in the merchandise candidate information are set as merchandise candidates and other merchandise buttons are not set as merchandise candidates. In this example, lighting of the merchandise button, which is a normal display of the merchandise button, is used for indicating that the button corresponds to a merchandise candidate. In addition, non-lighting of the merchandise button (gray-out) is used for indicating that the button does not correspond to a merchandise candidate. Meanwhile, these settings may be appropriately modified insofar as a cashier can determine whether or not the merchandise button corresponds to a merchandise candidate. Thereafter, the display control section 72 outputs the update information to the connection interface 65. In addition, the update information is output from the connection interface 65 to the connection interface 176, and the update information is output from the connection interface 176 to the third display device 106. Thereby, the third display device 106 updates a display screen and displays a selection screen for merchandise candidates.

The input reception section 73 receives various input operations from input and output circuits such as the keyboards 22 and 107 and the touch panels 26 and 105. For example, it is assumed that a cashier pushes down a merchandise button (merchandise selection button) of the keyboard 107 or touches a merchandise button (merchandise selection button) of the touch panel 105 while the selection screen for merchandise candidates is displayed on the third display device 106. In this case, information regarding an operation of the merchandise button operated is output from the input and output circuit to the connection interface 176. In addition, the information is output from the connection interface 176 to the connection interface 65 and is notified to the input reception section 73 from the connection interface 65.

The sales registration section 74 registers merchandise information regarding one merchandise item corresponding to the information regarding the operation of the merchandise button, which is received from the keyboard 107 or the touch panel 105 by the input reception section 73, in a registration table or the like on the basis of the information. In addition, the sales registration section 74 performs a process of adjusting merchandise items for one transaction which are registered by that time on the basis of closing operation information received from the touch panel 26 or the like by the input reception section 73, and registers the sales information thereof in a sales table or the like.

Next, the operation of the checkout system 1 will be described.

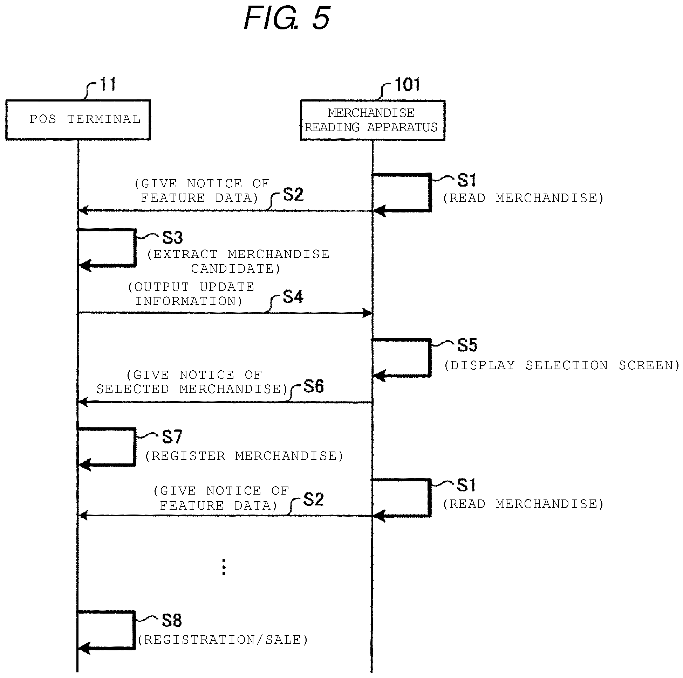

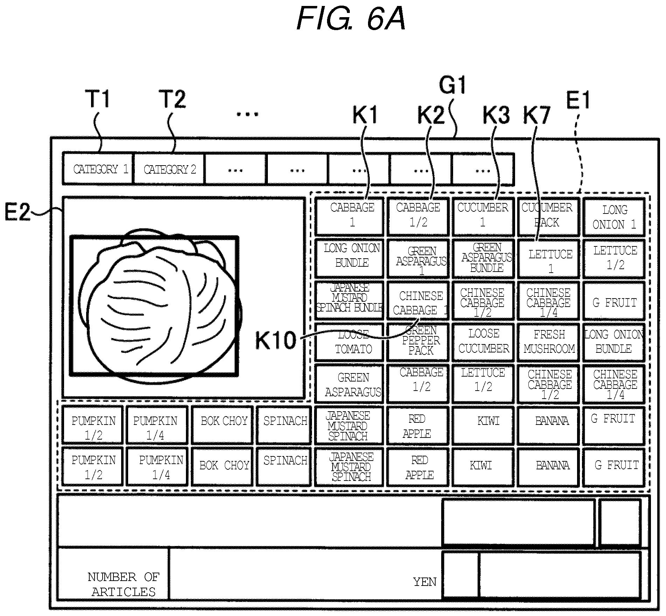

FIG. 5 is a flow chart illustrating an example of processing for merchandise registration and a checkout process of the checkout system 1 in one transaction. Hereinafter, the operation of the checkout system 1 will be described using the flow chart illustrated in FIG. 5 as an example. Meanwhile, hereinafter, it is assumed that functional sections such as the merchandise candidate extraction section 71, the display control section 72, the input reception section 73, and the sales registration section 74 are started up by the CPU 61 executing a program stored in the ROM 62 or the HDD 64 in the POS terminal 11. In addition, it is assumed that functional units such as the image capturing unit 51, the merchandise detection section 52, and the feature data extraction section 53 are started up by the CPU 161 executing a program stored in the ROM 162 in the merchandise reading apparatus 101. Further, it is assumed that a preset screen (see FIG. 6A) is displayed on the third display device 106 and that the image capturing unit 164 is turned on at all times in the merchandise reading apparatus 101.

First, the merchandise reading apparatus 101 performs a process of reading an article held near the reading window 103 (S1). Specifically, a cashier picks up an article (for example, the article G) before reading from the first shopping basket 153a, and holds the article G (see FIG. 1) near the reading window 103 (see FIG. 1) before placing the article in the second shopping basket 153b (see FIG. 1), so that the article is read by the image capturing unit 164 (see FIG. 2). In the merchandise reading apparatus 101, a frame image captured by the image capturing unit 164 is received by the image capturing section 51 and is stored in the RAM 163. In addition, the merchandise detection section 52 detects an article from the frame image, and the feature data extraction section 53 extracts feature data from data of an article image.

Next, the merchandise reading apparatus 101 (feature data extraction section 53) notifies the POS terminal 11 (merchandise candidate extraction section 71) of the feature data of the article held near the reading window (S2).

In the POS terminal 11, the merchandise candidate extraction section 71 extracts merchandise information (merchandise candidate information) from the PLU file F1 in order of the degree of similarity on the basis of the feature data received from the merchandise reading apparatus 101, and outputs the merchandise candidate information to the display control section 72 (S3). The number of units of merchandise candidate information which are output may be appropriately set. In this example, it is assumed that four units of high-ranked merchandise candidate information are extracted.

Further, in the POS terminal 11, the display control section 72 outputs update information of a preset screen to cause merchandise buttons of four high-ranked merchandise candidates designated in the merchandise candidate information to be lit and the other merchandise buttons to be grayed-out, to the third display device 106 of the merchandise reading apparatus 101 (S4).

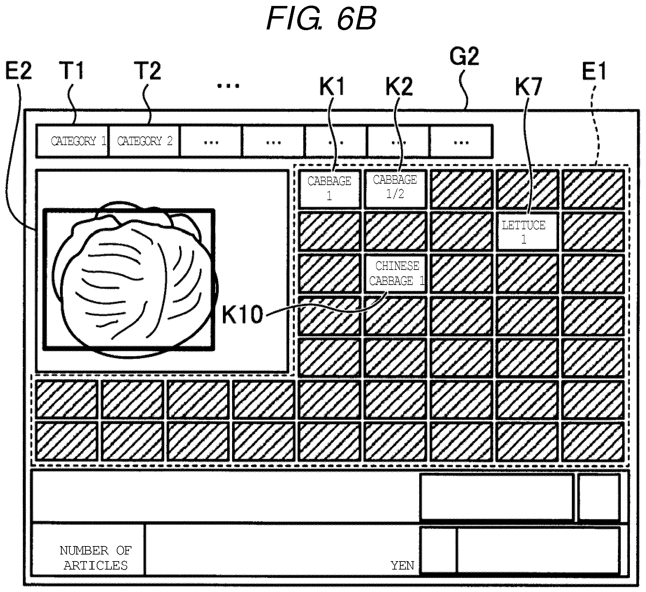

In the merchandise reading apparatus 101, the third display device 106 transitions from the preset screen displayed on the basis of the update information output from the display control section 72, to a selection screen (see FIG. 6B) for merchandise candidates (S5).

Further, in the merchandise reading apparatus 101, when a merchandise button corresponding to a merchandise candidate in the selection screen is operated through the touch panel 105 (or the keyboard 107) by a cashier, an input and output circuit (not shown) of the touch panel 105 (or the keyboard 107) notifies the input reception section 73 of the POS terminal 11 of the information (merchandise identification information) that the button is operated (S6).

In the POS terminal 11, when merchandise identification information from the merchandise reading apparatus 101 is received by the input reception section 73, the sales registration section 74 registers merchandise information of one merchandise item in a registration table or the like (S7).

Step S1 to step S7 are performed on all articles in the shopping basket 153a (see FIG. 1). Thereafter, a cashier presses down a closing key of the keyboard 22 or the touch panel 26 of the POS terminal 11. In response to this operation, the POS terminal 11 is notified of the input from the input reception section 73, and the sales registration section 74 performs a registration process for one transaction to register the sales information thereof in a sales table or the like (S8).

FIGS. 6A and 6B illustrate display examples of a preset screen and a selection screen on the third display device 106, respectively. FIG. 6A illustrates a display example of the preset screen, and FIG. 6B illustrates a display example of the selection screen.

A preset screen G1 illustrated in FIG. 6A includes tabs T1, T2,..., a merchandise button display area E1, an image display area E2, and the like. The tabs T1, T2,... are tab buttons for switching categories of merchandise buttons. The merchandise button display area E1 is a display area including merchandise buttons K1, K2,... of one of the categories designated by one of the tabs T1, T2,... at respective determined positions. The image display area E2 is a display area including an image of an article being subjected to object recognition. A cashier designates a category from the tabs T1, T2,... by performing a touch input or the like on the screen, to select the corresponding merchandise buttons K1, K2,... in the merchandise button display area E1. In response to this operation, information regarding the selected one of the merchandise buttons K1, K2,... is received by the input reception section 73 of the POS terminal 11, and the merchandise information thereof is registered in the sales registration section 74.

A selection screen G2 illustrated in FIG. 6B is a screen in which a merchandise button for a merchandise candidate is lit and merchandise buttons for the non-candidate merchandise is displayed as grayed-out in comparison with the preset screen G1 illustrated in FIG. 6A, that is, an updated screen of the preset screen G1. This example shows a display example when an article which is a target for object recognition is set to be one head of cabbage, and a first candidate "one head of cabbage", a second candidate "one head of lettuce", a third candidate "one head of Chinese cabbage", and a fourth candidate "half a head of cabbage" are extracted as four high-ranked merchandise candidates. As illustrated in FIG. 6B, in the selection screen G2, merchandise buttons (a merchandise button K1, a merchandise button K7, a merchandise button K10, and a merchandise button K2) respectively corresponding to "one head of cabbage", "one head of lettuce", "one head of Chinese cabbage", and "half a head of cabbage" are displayed being lit. In addition, all of the other merchandise buttons are displayed as being grayed-out.

In the input reception section 73 of the POS terminal 11, only merchandise buttons K1, K2, K7, and K10, which are being lit, can receive an operation input thereof. A cashier selects any of the merchandise buttons K1, K2, K7, and K10 being lit by performing a touch input or the like on the screen. In response to this operation, information regarding the merchandise button selected by the cashier is received by the input reception section 73 of the POS terminal 11, and the sales registration section 74 performs merchandise registration of the merchandise information.

The display example of the selection screen G2 of FIG. 6B leads to the same result even when object recognition is performed on the other merchandise items in the same category. For example, when object recognition is performed on "one head of lettuce", four high-ranked merchandise candidates may be the same as those in the above-described case although the rank of similarity is different and "one head of lettuce" is a first candidate. In addition, when object recognition is performed on articles of the same type having different surface states such as a shape or color, the four high-ranked merchandise candidates may be the same, but the order of the candidates may be different from that in the above case. In this case, the same selection screen G2 is obtained. Accordingly, according to the present embodiment, display positions of respective merchandise buttons corresponding to the four high-ranked merchandise candidates can be displayed at fixed positions, i.e., each potential candidate item under a given selection tab has the same screen position.

Meanwhile, even when not all of the four high-ranked merchandise candidates but less than four of the merchandise candidates are the same as those in the above case, merchandise buttons corresponding to the merchandise candidates can be displayed at fixed positions.

In the present embodiment, it is assumed that high-ranked merchandise candidates belong to the same page of the same category, but the high-ranked merchandise candidates may belong to a plurality of pages of the same category or a plurality of categories. For example, when merchandise items in the same category cannot be displayed on one screen due to a large number of merchandise items, the display control section 72 divides merchandise buttons shown in the merchandise button display area E1 into a plurality of pages and displays the merchandise buttons on a screen in units of pages. In this case, the display control section 72 arranges merchandise buttons of a page including merchandise which is a first candidate in the merchandise button display area E1. In addition, the display control section 72 outputs update information to cause merchandise buttons of high-ranked merchandise candidates included in the page to be lit and the other, non-candidate, merchandise buttons to be grayed-out, to the third display device 106.

Further, the display control section 72 may output update information to cause merchandise candidates that are ranked lower than a second merchandise candidate and supposed to be included in another page, to be displayed as grayed- out merchandise buttons in a selectable manner, to the third display device 106.

In addition, in the present embodiment, merchandise buttons corresponding to high-ranked merchandise candidates are lit and the other merchandise buttons are grayed-out, but a manner of displaying these merchandise buttons is not limited thereto. These setting may be appropriately modified insofar as a cashier can determine whether or not a merchandise button is for a merchandise candidate. A modification such as blinking the merchandise button, display of the merchandise button using a different color, or differentiating of shapes of the merchandise buttons may be appropriately employed instead of or in addition to the above-described display manner of lighting the merchandise buttons. In addition, in the present embodiment, merchandise buttons corresponding to high-ranked merchandise candidates are lit uniformly without difference based on the degree of similarity, but a manner of displaying the merchandise buttons is not limited thereto. For example, the color or density of a lit merchandise button may be changed in accordance with the order of the degree of similarity so that the order of the degree of similarity is visually perceptible. In addition, a number indicating the order of the degree of similarity may be displayed on a merchandise button.

In the present embodiment, a description of a function of reading a bar code attached to an article using a bar code scanner is omitted in order to facilitate the understanding of the description. The function of reading a bar code may be performed appropriately in combination with the checkout system according to the present embodiment.

As described above, according to the present embodiment, even when the order of the degree of similarity varies depending on reading of different articles, selection buttons corresponding to merchandise candidates are displayed at fixed positions associated with the respective merchandise candidates, which are set in a preset screen in advance. In addition, even when merchandise candidates belong to a plurality of pages or a plurality of categories, a selection button corresponding to at least a first merchandise candidate is displayed at a fixed position associated with the candidate, which is set in a preset screen in advance. Accordingly, it is possible to fix display position of a selection button for at least one high-ranked merchandise candidate (at least a highest-ranked candidate) to a predetermined position.

### Second Embodiment

In the first embodiment, a merchandise button which is set in a preset screen is lit as a selection button for a merchandise candidate. In a second embodiment, a screen exclusively for selection of a merchandise candidate is provided. Meanwhile, hereinafter, differences from the first embodiment will be mainly described, and the illustration and description of the same portions as those in the first embodiment will be appropriately omitted.

The checkout system according to the second embodiment further includes a dedicated selection screen for selecting a merchandise candidate, and a position designation file (display position information) for displaying a selection button (merchandise selection button) for each merchandise candidate at a predetermined position. The selection screen and the position designation file are used in a state of being stored in an HDD 64 or the like.

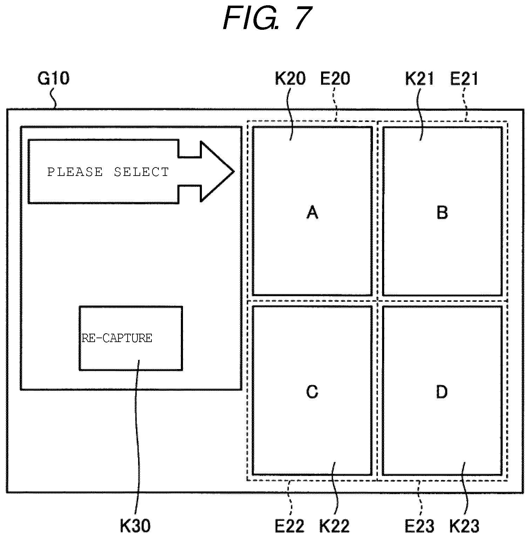

FIG. 7 illustrates a screen configuration of a selection screen according to the second embodiment. A selection screen G10 illustrated in FIG. 7 has selection buttons K20, K21, K22, and K23 for merchandise candidates arranged in four determined areas (a first area E20, a second area E21, a third area E22, and a fourth area E23), respectively. In addition, in this example, a re-recognition button K30 for giving an instruction for performing the object recognition process again is provided in an area other than the four areas. In this example, arrangement locations of the selection buttons K20, K21, K22, and K23 are fixed to respective positions illustrated in FIG. 7. Hereinafter, the selection buttons K20, K21, K22, and K23 are respectively identified by "A", "B", "C", and "D" indicating the arrangement locations of FIG. 7.

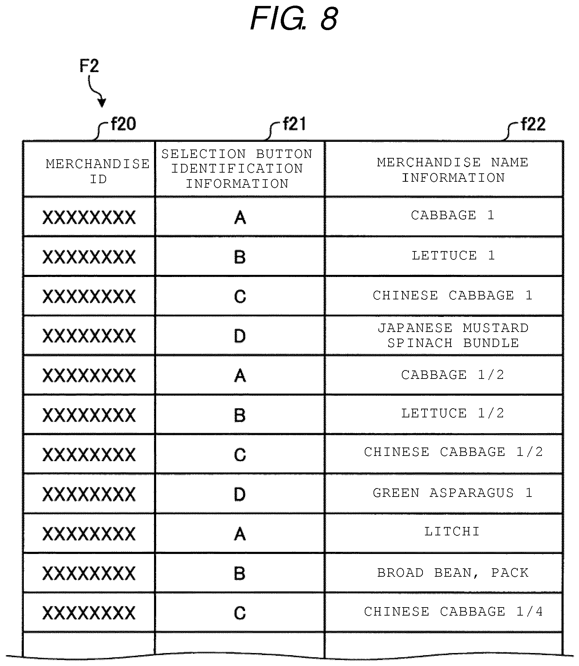

FIG. 8 illustrates a data configuration of a position designation file. A position designation file F2 illustrated in FIG. 8 is a data file in which data of a "merchandise ID" f20, "selection button identification information" f21, and "merchandise name information" f22 are associated with each merchandise item. In FIG. 8, "cabbage 1" and "cabbage 1/2" are associated with a selection button "A". In addition, "lettuce 1" and "lettuce 1/2" are associated with a selection button "B". In addition, "Chinese cabbage 1", "Chinese cabbage 1/2", and "Chinese cabbage 1/4" are associated with a selection button "C". In addition, "Japanese mustard spinach bundle" and "green asparagus 1" are associated with a selection button "D". Description of the arrangement locations of the other merchandise items are omitted.

In addition, in the second embodiment, when merchandise candidate information is output by a merchandise candidate extraction section 71 (see FIG. 4), a display control section 72 (see FIG. 4) of a POS terminal 11 performs a process of displaying a selection screen on a third display device 106 (see FIG. 2) as follows.

First, the display control section 72 extracts information indicating display positions of four high-ranked merchandise candidates from a position designation file F2 (see FIG. 8). For example, the display control section 72 uses merchandise IDs of the respective four high-ranked merchandise candidates which are output as merchandise candidate information, and extracts a pair of "selection button identification information" f21 and "merchandise name information" f22 which are associated with a "merchandise ID" f20 in the position designation file F2, for each merchandise ID. Further, the display control section 72 sets data (merchandise name information) of the "merchandise name information" f22, in a selection button designated by the extracted data of the "selection button identification information" f21 so as to be capable of being displayed. In addition, the display control section 72 outputs the selection screen to a third display device 106.

Meanwhile, when "merchandise name information" is set in a selection button so as to be capable of being displayed, the display control section 72 temporarily stores "selection button identification information" and a "merchandise ID" thereof in a RAM 63 or the like as corresponding information. Thereby, the display control section 72 manages a selection button and a merchandise candidate which is set in the selection button in association with each other.

Here, it is assumed that high-ranked merchandise candidates for which the same selection button is designated by "selection button identification information" f2 (high-ranked merchandise candidates for which a common display position is designated) are included in the four high-ranked merchandise candidates. In this case, the display control section 72 sets merchandise name information in selection buttons for which merchandise candidates in descending order of the degree of similarity. For example, the display control section 72 sets merchandise name information of a merchandise candidate having a high degree of similarity in any selection button. Further, it is assumed that the same selection button is designated as a setting destination of merchandise name information. In this case, first, merchandise name information of merchandise candidates having other selection buttons as the respective setting destinations are set in the selection buttons, and merchandise name information of the remaining merchandise candidates having overlapping designation destinations of the remaining selection buttons are set in the selection buttons.

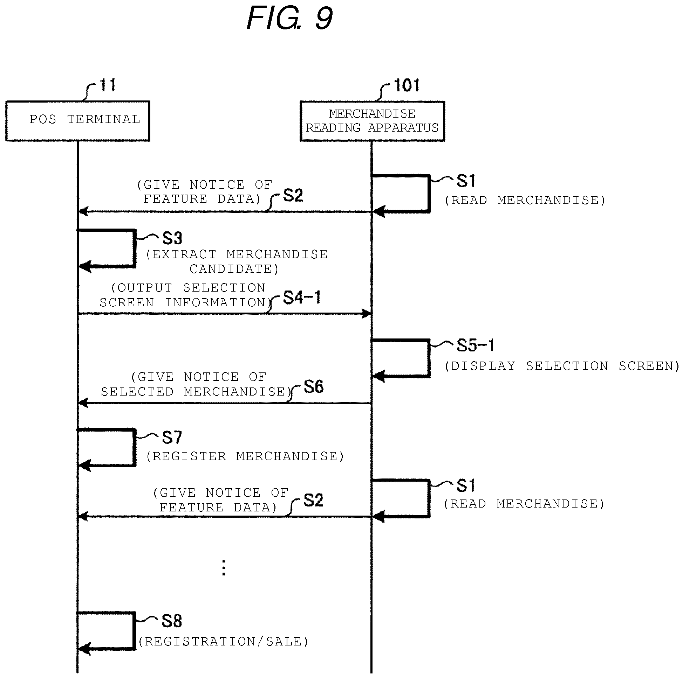

Next, the operation of the checkout system according to the second embodiment will be described. FIG. 9 is a flow chart illustrating an example of merchandise registration and a checkout process of the checkout system for one transaction according to the second embodiment. Operations of step S1 to step S3 are the same as those in the first embodiment, and thus a description thereof will be omitted here. Hereinafter, step S4-1 and thereafter will be described.

When merchandise candidate information of four high-ranked merchandise candidates are output by the merchandise candidate extraction section 71, the display control section 72 performs the next process. That is, the display control section 72 sets merchandise name information of the respective four high-ranked merchandise candidates which are output as the merchandise candidate information at determined display positions, that is, selection buttons designated in the position designation file F2, and outputs selection screen information including the selection buttons thereof toward the third display device 106 (S4-1).

Then, in the merchandise reading apparatus 101, the third display device 106 displays selection screen information which is output by the display control section 72 (S5-1).

Further, in the merchandise reading apparatus 101, when a selection button corresponding to a merchandise candidate in a selection screen is operated by a cashier through a touch panel 105 (or a keyboard 107), an input and output circuit (not shown) of the touch panel 105 (or the keyboard 107) notifies an input reception section 73 of the POS terminal 11 of the positional information thereof (S6).

In the POS terminal 11, the input reception section 73 receives positional information from the merchandise reading apparatus 101, a selection button in a selection screen is specified from the positional information, and merchandise identification information is output to a sales registration section 74 from corresponding information stored in the RAM 63 or the like. Then, the sales registration section 74 registers merchandise information regarding one merchandise item in a registration table or the like (S7).

The above-described processes of step S1 to step S7 are performed on all articles in a shopping basket 153a (see FIG. 1). Thereafter, in the POS terminal 11, a cashier presses down a keyboard 22 or a closing key of a touch panel 26. Then, in the POS terminal 11, the sales registration section 74 performs a process of checking out merchandise items for one transaction and registers the sales information thereof in a sales table or the like (S8).

Meanwhile, when a re-recognition button is pressed down on the selection screen, the input reception section 73 of the POS terminal 11 receives the positional information thereof from an input and output circuit (not shown) of the touch panel 105 (or the keyboard 107). The input reception section 73 specifies a re-recognition button from the positional information, and notifies the display control section 72 or the merchandise candidate extraction section 71 of the specification of the re-recognition button. The display control section 72 closes the selection screen and erases corresponding information stored in the RAM 63 or the like. In addition, the merchandise candidate extraction section 71 extracts merchandise candidate information again on the basis of feature data which is thereafter received from the merchandise reading apparatus 101, and outputs the extracted merchandise candidate information to the display control section 72.

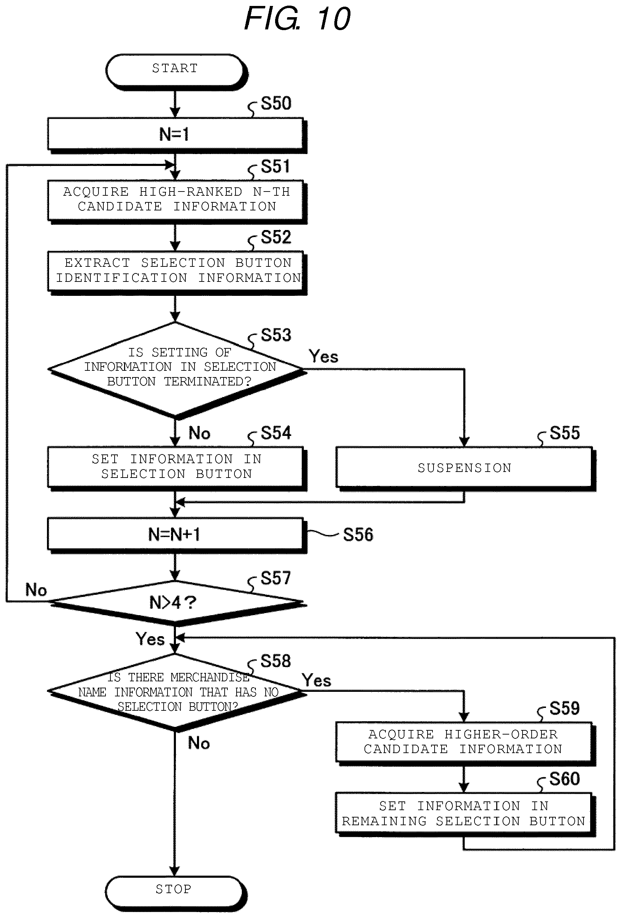

FIG. 10 is a flow chart illustrating a process of setting merchandise name information of a merchandise candidate in a selection button, which is performed by the display control section 72. First, the display control section 72 sets an initial value "1" in a variable N (N=1, 2, 3,...) (S50).

Next, the display control section 72 acquires a merchandise ID of a high-ranked N-th merchandise candidate from merchandise candidate information extracted by the merchandise candidate extraction section 71 (S51).

Next, the display control section 72 extracts selection button identification information and merchandise name information corresponding to the merchandise ID, from a position designation file F2 (S52).

Here, it is determined whether or not merchandise name information is set in a selection button indicated by the selection button identification information (S53).

When the merchandise name information is not set in the selection button indicated by the selection button identification information (step S53: determination result of No), the display control section 72 sets the merchandise name information extracted in step S52 in the selection button (S54).

When the merchandise name information is set in the selection button indicated by the selection button identification information (step S53: determination result of Yes), the display control section 72 temporarily stores the merchandise name information extracted in step S52 in the RAM 63 or the like and postpones setting in the selection button (S55).

After step S54 and step S55 are performed, the display control section 72 increments the value of the variable N (S56).

Next, the display control section 72 determines whether or not the variable N exceeds a threshold value ("4" corresponding to four high-ranked candidates in this example) (S57).

When the variable N is equal to or less than "4" (step S57: determination result of No), the display control section 72 returns to step S51 and repeatedly performs the above-described process on the next high-ranked merchandise candidate (high-ranked second merchandise candidate in the second round).

In addition, when the variable N exceeds "4" (step S57: determination result of Yes), the display control section 72 determines whether or not merchandise name information for which the setting of the selecting button has not been performed yet is present (S58).

When there is such merchandise name information (step S58: determination result of Yes), merchandise name information of a higher-order merchandise candidate is acquired from the merchandise name information for which the setting of the selecting button has not been performed yet (S59).

In addition, the display control section 72 sets the merchandise name information acquired in step S59 in any of the remaining selection buttons in which merchandise name information is not set (S60).

After step S60 is performed, the display control section 72 returns to step S58 and similarly repeats the above-described processes from step S58. In addition, when there is no merchandise name information for which the setting of the selecting button has not been performed yet (step S58: determination result of No), the display control section 72 terminates this setting process and outputs selection screen information including a selection button subjected to setting toward the third display device 106.

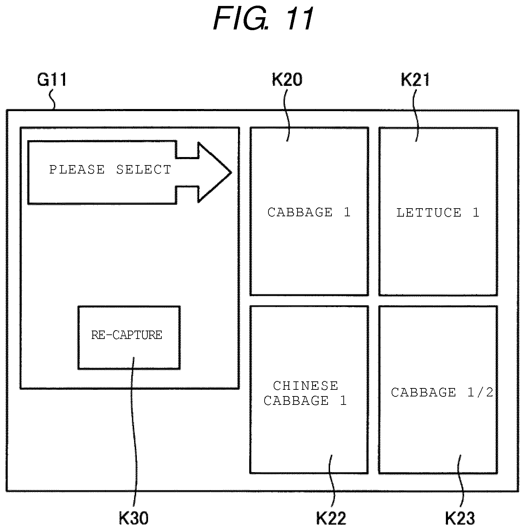

FIG. 11 illustrates an example of display on the third display device 106 when merchandise name information is set in the selection buttons K20, K21, K22, and K23 of the selection screen G10 (see FIG. 7). A selection screen G11 illustrated in FIG. 11 shows a display example when a first candidate "one head of cabbage", a second candidate "one head of lettuce", a third candidate "one head of Chinese cabbage", and a fourth candidate "half a head of cabbage" are extracted as four high-ranked merchandise candidates.

In the position designation file F2 (see FIG. 8), a selection button "A" is associated with "cabbage 1" which is the first candidate. Accordingly, "cabbage 1" is displayed in the selection button K20 (corresponding to the arrangement location "A" of FIG. 7) of FIG. 11 as merchandise name information.

In addition, in the position designation file F2 (see FIG. 8), a selection button "B" is associated with "lettuce 1" which is the second candidate. Accordingly, "lettuce 1" is displayed in the selection button K21 (corresponding to the arrangement location "B" of FIG. 7) of FIG. 11 as merchandise name information.

In addition, in the position designation file F2 (see FIG. 8), a selection button "C" is associated with "Chinese cabbage 1" which is the third candidate. Accordingly, "Chinese cabbage 1" is displayed in the selection button K22 (corresponding to the arrangement location "C" of FIG. 7) of FIG. 11 as merchandise name information.

Further, in the position designation file F2 (see FIG. 8), a selection button "A" is associated with "cabbage 1/2" which is the fourth candidate. However, "cabbage 1" indicating a high-ranked merchandise candidate is set in the selection button K20 (corresponding to the arrangement location "A" of FIG. 7) of FIG. 11. In addition, "lettuce 1" and "Chinese cabbage 1" which are independently designated are set in the selection button K21 and the selection button K22 of FIG. 11, respectively. Accordingly, "cabbage 1/2" is set in the selection button K23 (arrangement location "D" of FIG. 7) which is the remaining selection button. Thereby, "cabbage 1/2" is displayed in the selection button K23 (corresponding to the arrangement location "D" of FIG. 7) of FIG. 11 as merchandise name information. The selection button K20 to selection button K23 having merchandise name information set therein are examples of selection information.

In the second embodiment, selection buttons for four high-ranked merchandise candidates are displayed, but the exemplary embodiment is not limited thereto. The number of merchandise candidates may be increased or decreased to 3, 5, or the like, and the number of selection buttons may be increased or decreased accordingly.

In addition, in the second embodiment, the positions of selection buttons are fixed to respective predetermined positions, and the display control section 72 displays and sets merchandise name information of a merchandise candidate in a selection button located at a position designated in the position designation file F2. However, a unit of displaying a selection button indicating a merchandise candidate at a fixed position is not limited thereto. For example, a selection button including merchandise name information which is created in advance may be disposed at a position designated in the position designation file F2.

In addition, in the second embodiment, an example of a selection button is described, but selection information is not limited thereto. Any type of selection information may be used insofar as a cashier can select merchandise corresponding to an article from merchandise candidates.

As described above, according to the second embodiment, a high-ranked merchandise candidate can be selected by a large selection button. In addition, a selection button for merchandise is displayed at a determined position every time. The same position may be designated as display destinations of a plurality of merchandise items as the number of selection buttons is reduced. When the number of merchandise candidates designating the position is one, a selection button for the merchandise is displayed at a determined position. When more than one merchandise candidate designate the same position, the highest-ranked merchandise candidate is located in that position, and the lower-ranked merchandise candidate is located in an alternative position not taken by another merchandise candidate. An experienced cashier tends to remember the merchandise associated with a display position of selection keys. For this reason, the casher may be able to predict a display position of a selection key by looking at an article to be scanned, even without looking at the selection screen.

In addition, even when the number of merchandise candidates designating the same position is two or more, a selection button for a higher-order merchandise candidate, which is more likely to correspond to an article to be purchased is displayed at the predetermined position.

Therefore, it is possible to fix display positions of selection buttons for respective high-ranked merchandise candidates to predetermined positions.

In the first and second embodiments, the POS terminal 11 serves as an information processing apparatus and the CPU 61 serves as the functional sections such as the merchandise candidate extraction section 71, the display control section 72, the input reception section 73, and the sales registration section 74, but the exemplary embodiment is not limited thereto. The CPU 61 may be configured to perform some or all of the functions of the CPU 161. Alternatively, the reading unit 110 may serve as an information processing apparatus, and the CPU 161 may be configured to perform some or all of the functions of the CPU 61.

In addition, in the first and second embodiments, the information processing apparatus and program are applied to a checkout system. However, the information processing apparatus and program may not be applied thereto. For example, such an information processing apparatus and program may be applied to a self POS in which both processes of merchandise reading and merchandise checkout (payment process) are performed .

### Third Embodiment

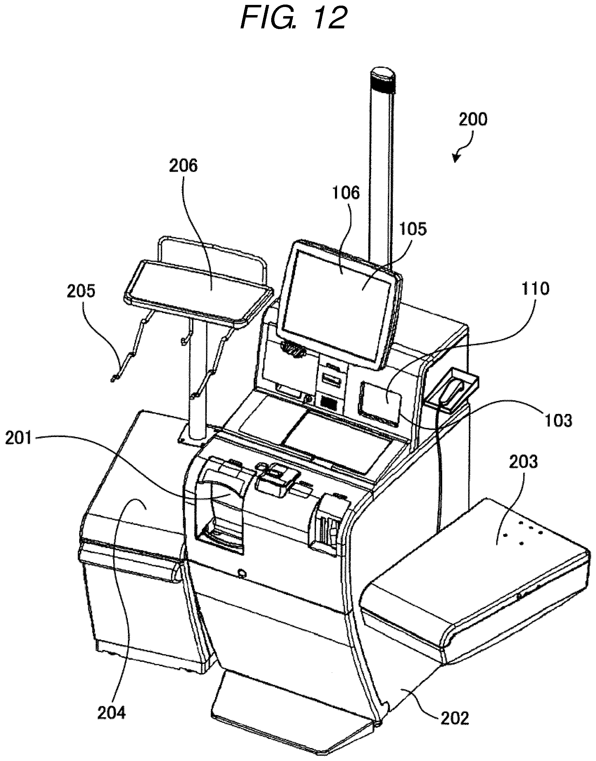

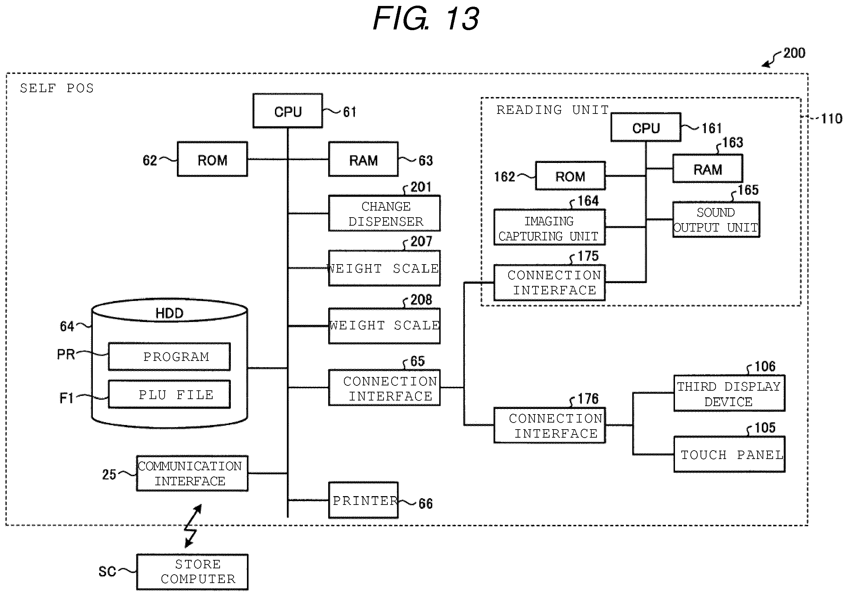

In a third embodiment, the information processing apparatus and program are applied to the self POS. Meanwhile, hereinafter, the same components as those (or components equivalent to those) illustrated in FIGS. 1 and 2 are denoted by the same reference numerals and signs, and a description thereof will be omitted. FIG. 12 is an external perspective view of a self POS 200. FIG. 13 is a block diagram illustrating a hardware configuration of the self POS 200.

As illustrated in FIGS. 12 and 13, a main body 202 of the self POS 200 includes a third display device 106 having a touch panel 105 disposed on the front surface thereof, a reading unit 110 for reading a merchandise image, and the like. The third display device 106 displays a registration screen and the like, in addition to the preset screen and the selection screen for candidate merchandise which are described in the above embodiments. In addition, the main body 202 includes a merchandise mounting table 203 on which a first shopping basket 153a (see FIG. 1) having non-scanned merchandise therein is placed, on the right thereof and includes a merchandise mounting table 204 on which scanned merchandise is placed, on the left thereof. The merchandise mounting table 204 includes a bag hook 205 on which a bag for putting scanned merchandise therein is hung, and a temporary placing table 206 on which scanned merchandise is temporarily placed before being put in a bag. The merchandise mounting tables 203 and 204 also serve as weight scales 207 and 208, respectively, and have a function of confirming that the weights of merchandise before and after registration are the same as each other. Further, the main body 202 includes a change dispenser 201 and the like on the front surface thereof.

In the self POS 200, the CPU 161 appropriately executes a program stored in a ROM 162 to serve as functional sections such as the image capturing section 51, the merchandise detection section 52, and the feature data extraction section 53 which are described in the first embodiment (or the second embodiment). In addition, the CPU 61 appropriately executes a program stored in the ROM 62 or the HDD 64 to serve as functional sections such as the merchandise candidate extraction section 71, the display control section 72, the input reception section 73, and the sales registration section 74 which are described in the first embodiment (or the second embodiment).

When feature data are output from the reading unit 110, the feature data are input to the CPU 61 through the connection interface 175 and the connection interface 65. In addition, a selection screen generated by the display control section 72 is output to the third display device 106 through the connection interface 65 and the connection interface 176. In addition, when a selection button for a merchandise candidate is pressed down in the touch panel 105, the positional information thereof is input to the CPU 61 through the connection interface 176 and the connection interface 65.

Meanwhile, the operation of the self POS 200 is substantially the same as the operation in the first embodiment (or the second embodiment). For that reason, the description of the operation will be omitted here.

Meanwhile, also in the third embodiment, some or all of the functions can be performed by either the CPU 61 or the CPU 161 as in the first and second embodiments.

Various programs used in the information processing apparatuses according to the above embodiments and the modification thereof may be provided by being recorded in a computer-readable recording medium such as a CD-ROM, a flexible disk (FD), a CD-R, or a digital versatile disk (DVD) as files in an installable format or an executable format, and may be executed by being read by an HDD, a flash ROM, or the like of the information processing apparatus.

In addition, the programs may be stored in a computer connected to a network such as the Internet, and may be configured to be provided by being downloaded through a network.

## Claims

1. An image recognition system, comprising:
a data storage that stores, in association with each of a plurality of reference articles, a feature value calculated from an image of the reference article;
a camera configured to capture an image of an article to be identified;
a display; and
a processor configured to
calculate a feature value of the article to be identified, using the captured image,
determine one or more high-ranked candidates using a similarity level between the feature value of the article to be identified and each of the feature values of the reference articles, and
control the display to display a graphical user interface that includes a plurality of objects arranged in a predetermined region thereof, wherein the one or more objects are merchandise selection buttons
corresponding to one of said one or more high-ranked candidates and, are displayed at a
fixed display position that is associated with the corresponding high-ranked candidate, **characterized in that**
the processor is further adapted to using
a position designation file (F2) for displaying, at the fixed display position, a
merchandise selection button (A, B, C, D) which is associated with the merchandise name information (f22); and is further adapted to
modify a
display setting of a merchandise selection button so as to light the button as a function of the degree of similarity of a high-ranked candidate.

2. The image recognition system according to claim 1, wherein
in the graphical user interface, the display format of said one or more objects that correspond to said one or more high-ranked candidates is different from the display format of the rest of the plurality of objects which do not correspond to any of said one or more high-ranked candidates.

3. The image recognition system according to claim 1 or 2, wherein
said one or more objects that correspond to said one or more high-ranked candidates are not grayed out, and
said rest of the plurality of objects are grayed out.

4. The image recognition system according to any one of claims 1 to 3, wherein
said one or more objects that correspond to said one or more high-ranked candidates are selectable, and
said rest of the plurality of objects are not selectable.

5. The image recognition system according to any one of claims 1 to 4, wherein
the plurality of objects arranged in the predetermined region of the graphical user interface includes only said one or more objects that corresponds to said one or more high-ranked candidates.

6. The image recognition system according to any one of claims 1 to 5, wherein
a display position is associated with at least two high-ranked candidates, and
an object corresponding to one of said at least two high-ranked candidates that has a highest similarity level is displayed at the pre-selected fixed display position.

7. The image recognition system according to any one of claims 1 to 6, wherein
the processor is further configured to control the display to display, before determination of the high-ranked candidates, an initial graphical user interface that includes the plurality of objects, each of which corresponds to one of the reference articles and is displayed at a fixed display position that is associated with the corresponding reference article, and
in response to determination of the high-ranked candidates, the graphical user interface is displayed in place of the initial graphical user interface.

8. A method for displaying one or more graphical user interfaces for a computing environment, the method comprising:
storing, in association with each of a plurality of reference articles, a feature value calculated from an image of the reference article;
calculating a feature value of an article to be identified, using a captured image thereof;
determining one or more high-ranked candidates using a similarity level between the feature value of the article to be identified and each of the feature values of the reference articles; and
displaying a graphical user interface that includes a plurality of objects arranged in a predetermined region thereof, wherein the one or more objects are merchandise selection buttons corresponding to one of said one or more high-ranked candidates, and are displayed at a fixed display position that is associated with the corresponding high-ranked candidate, **characterized by** further comprising:
using a position designation file (F2) for displaying at the fixed display position a merchandise selection button (A, B, C, D) which is associated with the merchandise name information (f22); and
modifying a display setting of a merchandise selection button so as to light the button as a function of the degree of similarity of a high -ranked candidate.

9. The method according to claim 8, wherein
in the graphical user interface, the display format of said one or more objects that correspond to said one or more high-ranked candidates is different from the display format of the rest of the plurality of objects which do not corresponds to any of said one or more high-ranked candidates.

10. The method according to claim 8 or 9, wherein
said one or more objects that correspond to said one or more high-ranked candidates are not grayed out, and
said rest of the plurality of objects are grayed out.

11. The method according to any one of claims 8 to 10, wherein
said one or more objects that correspond to said one or more high-ranked candidates are selectable, and
said rest of the plurality of objects are not selectable.

12. The method according to any one of claims 8 to 11, wherein
the plurality of objects arranged in the predetermined region of the graphical user interface includes only said one or more objects that corresponds to said one or more high-ranked candidates.

13. The method according to any one of claims 8 to 12, wherein
when a display position is associated with at least two high-ranked candidates, an object corresponding to one of said at least two high-ranked candidates that has a highest similarity level is displayed at the pre-selected fixed display position.

14. The method according to any one of claims 8 to 13, further comprising:
display, before determination of the high-ranked candidates, an initial graphical user interface that includes the plurality of objects, each of which corresponds to one of the reference articles and is displayed at a fixed display position that is associated with the corresponding reference article, wherein
in response to the determination of the high-ranked candidates, the graphical user interface is displayed in place of the initial graphical user interface.

15. A non-transitory computer readable medium comprising a program that when executed by the processor of the system according to claim 1, causes
the system to perform the method for displaying
one or more graphical user interfaces for a computing environment according to any one of claims 8 to 14,

## Patentansprüche

1. Bilderkennungssystem, umfassend:
einen Datenspeicher, der, in Verbindung mit jedem einer Mehrzahl von Referenzartikeln, einen Merkmalswert speichert, berechnet aus einem Bild des Referenzartikels;
eine Kamera, konfiguriert um ein Bild eines zu identifizierenden Artikels aufzunehmen;
ein Display; und
einen Prozessor, konfiguriert um
einen Merkmalswert des zu identifizierenden Artikels mit dem aufgenommenen Bild zu berechnen,
einen oder mehrere hoch eingestufte Kandidaten durch Verwendung eines Ähnlichkeitslevels zwischen dem Merkmalswert des zu identifizierenden Artikels und jedem der Merkmalswerte der Referenzartikel zu bestimmen, und
das Display zu steuern bzw. zu regeln, um eine grafische Benutzeroberfläche anzuzeigen, die eine Mehrzahl von Objekten beinhaltet, angeordnet in einem vorbestimmten Bereich davon, wobei das eine oder die mehreren Objekte Waren-Auswahlschaltflächen sind, entsprechend einem der einen oder den mehreren hoch eingestuften Kandidaten, und an einer festen Anzeigeposition angezeigt werden, die mit dem entsprechenden hoch eingestuften Kandidaten verknüpft ist, **dadurch gekennzeichnet, dass**
der Prozessor ferner eingerichtet ist, um eine Positionskennzeichnungsdatei (F2) zu verwenden, zum Anzeigen, an der festen Anzeigeposition, einer Waren-Auswahlschaltfläche (A, B, C, D), welche mit der Warenbezeichnungsinformation (f22) verknüpft ist; und ferner eingerichtet ist, um eine Anzeigeeinstellung einer Waren-Auswahlschaltfläche zu verändern, um die Schaltfläche als eine Funktion des Ähnlichkeitsgrads eines hoch eingestuften Kandidaten zu beleuchten.

2. Bilderkennungssystem gemäß Anspruch 1, wobei
in der grafischen Benutzeroberfläche sich das Anzeigeformat des einen oder der mehreren Objekte, die dem einen oder den mehreren hoch eingestuften Kandidaten entsprechen, von dem Anzeigeformat des Rests der Mehrzahl von Objekten unterscheidet, welche nicht einem des einen oder der mehreren hoch eingestuften Kandidaten entsprechen.

3. Bilderkennungssystem gemäß Anspruch 1 oder 2, wobei
das eine oder die mehreren Objekte, die dem einen oder den mehreren hoch eingestuften Kandidaten entsprechen, nicht ausgegraut sind, und
der Rest der Mehrzahl von Objekten ausgegraut ist.

4. Bilderkennungssystem gemäß einem der Ansprüche 1 bis 3, wobei
das eine oder die mehreren Objekte, die dem einen oder den mehreren hoch eingestuften Kandidaten entsprechen, auswählbar sind, und
der Rest der Mehrzahl von Objekten nicht auswählbar ist.

5. Bilderkennungssystem gemäß einem der Ansprüche 1 bis 4, wobei
die Mehrzahl von Objekten, welche in dem vorbestimmten Bereich der grafischen Benutzeroberfläche angeordnet sind, nur das eine oder die mehreren Objekte beinhaltet, die dem einen oder den mehreren hoch eingestuften Kandidaten entsprechen.

6. Bilderkennungssystem gemäß einem der Ansprüche 1 bis 5, wobei
eine Anzeigeposition mit mindestens zwei hoch eingestuften Kandidaten verknüpft ist, und
ein Objekt, entsprechend einem der mindestens zwei hoch eingestuften Kandidaten, das ein höchstes Ähnlichkeitslevel aufweist, an der vorausgewählten festen Anzeigeposition angezeigt wird.

7. Bilderkennungssystem gemäß einem der Ansprüche 1 bis 6, wobei
der Prozessor ferner konfiguriert ist, um das Display zu steuern bzw. zu regeln, um, vor der Bestimmung der hoch eingestuften Kandidaten, eine anfängliche grafische Benutzeroberfläche anzuzeigen, die die Mehrzahl von Objekten beinhaltet, von welchen jedes einem der Referenzartikel entspricht und an einer festen Anzeigeposition angezeigt wird, die mit dem entsprechenden Referenzartikel verknüpft ist, und
als Reaktion auf die Bestimmung der hoch eingestuften Kandidaten die grafische Benutzeroberfläche anstelle der anfänglichen grafischen Benutzeroberfläche angezeigt wird.

8. Verfahren zum Anzeigen einer oder mehrerer grafischer Benutzeroberflächen für eine Computerumgebung, wobei das Verfahren umfaßt::
Speichern, in Verbindung mit jeder einer Mehrzahl von Referenzartikeln, eines Merkmalswertes, berechnet aus einem Bild des Referenzartikels;
Berechnen eines Merkmalswertes eines zu identifizierenden Artikels durch Verwendung eines davon aufgenommenen Bildes;
Bestimmen eines oder mehrerer hoch eingestufter Kandidaten durch Verwendung eines Ähnlichkeitslevels zwischen dem Merkmalswert des zu identifizierenden Artikels und jedem der Merkmalswerte der Referenzartikel; und
Anzeigen einer grafischen Benutzeroberfläche, die eine Mehrzahl von Objekten beinhaltet, angeordnet in einem vorbestimmten Bereich davon, wobei das eine oder die mehreren Objekte Waren-Auswahlschaltflächen sind, entsprechend einem des einen oder der mehreren hoch eingestuften Kandidaten, und
an einer festen Anzeigeposition angezeigt werden, die mit dem entsprechenden hoch eingestuften Kandidaten verknüpft ist, **gekennzeichnet durch** ferner umfassen:
Verwenden einer Positionsbestimmungsdatei (F2), zum Anzeigen an der festen Anzeigeposition einer Waren-Auswahlschaltfläche (A, B, C, D), welche mit der Warenbezeichnungsinformation (f22) verknüpft ist; und
Modifizieren einer Anzeigeeinstellung einer Waren-Auswahlschaltfläche, um die Schaltfläche als eine Funktion des Ähnlichkeitsgrads eines hoch eingestuften Kandidaten zu beleuchten.

9. Verfahren gemäß Anspruch 8, wobei
in der grafischen Benutzeroberfläche sich das Anzeigeformat des einen oder der mehreren Objekte, die dem einen oder den mehreren hoch eingestuften Kandidaten entsprechen, von dem Anzeigeformat des Rests der Mehrzahl von Objekten unterscheidet, welche nicht einem des einen oder der mehreren hoch eingestuften Kandidaten entsprechen.

10. Verfahren gemäß Anspruch 8 oder 9, wobei
das eine oder die mehreren Objekte, die dem einen oder den mehreren hoch eingestuften Kandidaten entsprechen, nicht ausgegraut sind, und
der Rest der Mehrzahl von Objekten ausgegraut ist.

11. Verfahren gemäß einem der Ansprüche 8 oder 10, wobei
das eine oder die mehreren Objekte, die dem einen oder den mehreren hoch eingestuften Objekten entsprechen, auswählbar sind, und
der Rest der Mehrzahl von Objekten nicht auswählbar ist.

12. Verfahren gemäß einem der Ansprüche 8 bis 11, wobei
die Mehrzahl von Objekten, welche in dem vorbestimmten Bereich der grafischen Benutzeroberfläche angeordnet ist, nur das eine oder die mehreren Objekte beinhaltet, die dem einen oder den mehreren hoch eingestuften Kandidaten entsprechen.

13. Verfahren gemäß einem der Ansprüche 8 bis 12, wobei
wenn eine Anzeigeposition mit mindestens zwei hoch eingestuften Kandidaten verknüpft ist, ein Objekt entsprechend einem der mindestens zwei hoch eingestuften Kandidaten, das ein höchstes Ähnlichkeitslevel aufweist, an der vorausgewählten festen Anzeigeposition angezeigt wird.

14. Verfahren gemäß einem der Ansprüche 8 bis 13, ferner umfassend:
Anzeigen, vor dem Bestimmen der hoch eingestuften Kandidaten, einer anfänglichen grafischen Benutzeroberfläche, die die Mehrzahl von Objekten beinhaltet, wovon jedes einem der Referenzartikel entspricht und an einer festen Anzeigeposition angezeigt wird, die mit dem entsprechenden Referenzartikel verknüpft ist, wobei
als Reaktion auf die Bestimmung der hoch eingestuften Kandidaten die grafische Benutzeroberfläche anstelle der anfänglichen grafischen Benutzeroberfläche angezeigt wird.

15. Nicht flüchtiges computerlesbares Medium, welches ein Programm umfaßt, das, wenn es von dem Prozessor des Systems gemäß Anspruch 1 ausgeführt wird, das System dazu veranlaßt, das Verfahren zum Anzeigen einer oder mehrerer grafischer Benutzeroberflächen für eine Computerumgebung gemäß einem der Ansprüche 8 bis 14 durchzuführen.

## Revendications

1. Dispositif d'identification d'image, comprenant :
un dispositif de mémorisation de données qui mémorise, en association avec chacun d'une pluralité d'articles de référence, une valeur caractéristique calculée à partir d'une image de l'article de référence ;
une caméra configurée de manière à capturer une image d'un article à identifier ;
un dispositif d'affichage ; et
une unité de traitement configurée de manière à
calculer une valeur caractéristique de l'article à identifier, en utilisant l'image capturée,
déterminer un ou plusieurs candidats de rang élevé en utilisant un niveau de similitude entre la valeur caractéristique de l'article à identifier et chacune des valeurs caractéristiques des articles de référence, et
commander l'affichage de manière à afficher une interface graphique d'utilisateur qui comporte une pluralité d'objets agencés dans une zone prédéterminée de celle-ci, dans lequel le ou les objets sont des boutons de sélection de marchandises correspondant à l'un desdits un ou plusieurs candidats de rang élevé et sont affichés à une position d'affichage fixe qui est associée au candidat de rang élevé correspondant, **caractérisé en ce que**
l'unité de traitement est, en outre, adaptée de manière à utiliser un fichier de désignation de position (F2) afin d'afficher, à la position d'affichage fixe, un bouton de sélection de marchandise (A, B, C, D) qui est associé à l'information de nom de marchandises (f22) ; et est, en outre, adaptée de manière à modifier un paramétrage d'affichage d'un bouton de sélection de marchandise afin d'illuminer le bouton en fonction du degré de similitude d'un candidat de rang élevé.

2. Dispositif d'identification d'image selon la revendication 1, dans lequel :
sur l'interface graphique d'utilisateur, le format d'affichage desdits un ou plusieurs objets qui correspondent auxdits un ou plusieurs candidats de rang élevé est différent du format d'affichage du restant de la pluralité d'objets qui ne correspondent à aucun desdits un ou plusieurs candidats de rang élevé.

3. Dispositif d'identification d'image selon la revendication 1 ou 2, dans lequel :
lesdits un ou plusieurs objets qui correspondent auxdits un ou plusieurs candidats de rang élevé ne sont pas grisés, et
ledit restant de la pluralité d'objets est grisé.

4. Dispositif d'identification d'image selon l'une quelconque des revendications 1 à 3, dans lequel :
lesdits un ou plusieurs objets qui correspondent auxdits un ou plusieurs candidats de rang élevé peuvent être sélectionnés, et
ledit restant de la pluralité d'objets ne peut pas être sélectionné.

5. Dispositif d'identification d'image selon l'une quelconque des revendications 1 à 4, dans lequel :
la pluralité d'objets agencés dans la zone prédéterminée de l'interface graphique d'utilisateur comporte uniquement lesdits un ou plusieurs objets qui correspondent auxdits un ou plusieurs candidats de rang élevé.

6. Dispositif d'identification d'image selon l'une quelconque des revendications 1 à 5, dans lequel :
une position d'affichage est associée au moins à deux candidats de rang élevé, et
un objet correspondant à l'un desdits au moins deux candidats de rang élevé qui présente un niveau de similitude des plus élevés est affiché à la position d'affichage fixe présélectionnée.

7. Dispositif d'identification d'image selon l'une quelconque des revendications 1 à 6, dans lequel :
l'unité de traitement est, en outre, configurée afin de commander l'affichage de manière à afficher, avant détermination des candidats de rang élevé, une interface graphique d'utilisateur initiale qui comporte la pluralité d'objets, chacun d'eux correspondant à l'un des articles de référence et est affiché à une position d'affichage fixe qui est associée à l'article de référence correspondant, et
en réponse à la détermination des candidats de rang élevé, l'interface graphique d'utilisateur est affichée à la place de l'interface graphique d'utilisateur initiale.

8. Procédé d'affichage d'une ou plusieurs interfaces graphiques d'utilisateur pour un environnement informatique, le procédé comprenant ;
la mémorisation, en association avec chacun d'une pluralité d'articles de référence, d'une valeur caractéristique calculée à partir d'une image de l'article de référence ;
le calcul d'une valeur caractéristique d'un article à identifier, en utilisant une image capturée de ce dernier ;
la détermination d'un ou plusieurs candidats de rang élevé en utilisant un niveau de similitude entre la valeur caractéristique de l'article à identifier et chacune des valeurs caractéristiques des articles de référence ; et
l'affichage d'une interface graphique d'utilisateur qui comporte une pluralité d'objets agencés dans une zone prédéterminée de cette dernière, dans lequel le ou les objets sont des boutons de sélection de marchandise correspondant à l'un desdits un ou plusieurs candidats de rang élevé et sont affichés à une position d'affichage fixe qui est associée au candidat de rang élevé correspondant, **caractérisé par le fait qu'**il comprend, en outre :
l'utilisation d'un fichier de désignation de position (F2) afin d'afficher, à la position d'affichage fixe, un bouton de sélection de marchandise (A, B, C, D) qui est associé aux informations de nom de marchandise (f22) ; et
la modification d'un paramétrage d'affichage d'un bouton de sélection de marchandise afin d'illuminer le bouton en fonction du degré de similitude d'un candidat de rang élevé.

9. Procédé selon la revendication 8, dans lequel
sur l'interface graphique d'utilisateur, le format d'affichage desdits un ou plusieurs objets qui correspondent auxdits un ou plusieurs candidats de rang élevé est différent du format d'affichage du restant de la pluralité d'objets qui ne correspondent à aucun desdits un ou plusieurs candidats de rang élevé.

10. Procédé selon la revendication 8 ou 9, dans lequel
lesdits un ou plusieurs objets qui correspondent auxdits un ou plusieurs candidats de rang élevé ne sont pas grisés, et
ledit restant de la pluralité d'objets est grisé.

11. Procédé selon l'une quelconque des revendications 8 à 10, dans lequel lesdits un ou plusieurs objets qui correspondent auxdits un ou plusieurs candidats de rang élevé peuvent être sélectionnés, et
ledit restant de la pluralité d'objets ne peut pas être sélectionné.

12. Procédé selon l'une quelconque des revendications 8 à 11, dans lequel
la pluralité d'objets agencés dans la zone prédéterminée de l'interface graphique d'utilisateur comporte uniquement lesdits un ou plusieurs objets qui correspond auxdits un ou plusieurs candidats de rang élevé.

13. Procédé selon l'une quelconque des revendications 8 à 12, dans lequel lorsqu'une position d'affichage est associée à au moins deux candidats de rang élevé, un objet correspondant à l'un desdits au moins deux candidats de rang élevé qui présente un niveau de similitude des plus élevés est affiché à la position d'affichage fixe présélectionnée.

14. Procédé selon l'une quelconque des revendications 8 à 13, comprenant, en outre :
l'affichage, avant la détermination des candidats de rang élevé, d'une interface graphique d'utilisateur initiale qui comporte la pluralité d'objets, chacun d'eux correspondant à l'un des articles de référence et est affiché à une position d'affichage fixe qui est associée à l'article de référence correspondant, dans lequel
en réponse à la détermination des candidats de rang élevé, l'interface graphique d'utilisateur est affichée à la place de l'interface graphique d'utilisateur initiale.

15. Support non transitoire pouvant être lu par un ordinateur comprenant un programme qui, lorsqu'il est exécuté par l'unité de traitement du dispositif selon la revendication 1, provoque l'exécution par le dispositif du procédé d'affichage d'une ou plusieurs interfaces graphiques d'utilisateur pour un environnement informatique selon l'une quelconque des revendications 8 à 14.
